# EUROPÄISCHE PATENTSCHRIFT

(11) **EP 2 228 559 B1**
(45) Veröffentlichungstag und Bekanntmachung des Hinweises auf die Patenterteilung: **17.08.2011**
(21) Anmeldenummer: 10002514.7
(22) Anmeldetag: 10.03.2010
(51) Int. Cl.: F16D 65/14, F16D 55/225, F16D 65/56

(54) **Doppelkolben-Scheibenbremse**
Double piston disc brake
Frein à disque à double piston

(30) Priorität: 13.03.2009 DE 102009013005
(43) Veröffentlichungstag der Anmeldung: 15.09.2010
(73) Patentinhaber: KNORR-BREMSE Systeme für Nutzfahrzeuge GmbH, 80809 München (DE)
(72) Erfinder: Baumgartner, Johann, 85368 Moosburg (DE); Geissler, Steffen, 63512 Hainburg (DE); Gruber, Robert, 83539 Pfaffing (DE)
(74) Vertreter: Mattusch, Gundula

(56) Entgegenhaltungen:
- EP-A2- 1 820 992
- WO-A1-97/22814
- WO-A1-2006/111136
- DE-A1- 2 400 470
- DE-A1- 4 307 018
- DE-A1- 4 307 019
- DE-T2- 60 122 689
- "Fachkunde Kraftfahrzeugtechnik", 1994, Verlag Europa-Lehrmittel, Wuppertal ISBN: 3808520655 pages 451-453,

## Beschreibung

Die Erfindung betrifft eine Doppelkolben-Scheibenbremse für ein Fahrzeug nach dem Oberbegriff des Anspruchs 1.

Scheibenbremsen mit hydraulischer oder pneumatischer Betätigung über Bremszylinder, die auf eine Zuspannvorrichtung einwirken, sind in verschiedensten Ausgestaltungen bekannt. Es sind weiterhin Bremskraftverstärker bekannt, zum Beispiel Druckluft-Hilfskraftbremsanlagen, die beispielsweise bei mittelschweren Lastwagen und Omnibussen Verwendung finden, die mit hydraulischen Scheibenbremsen ausgerüstet sind.

Eine Doppelkolben-Scheibenbremse mit zentraler Betätigung ist in der DE 198 04 426 C2 beschrieben. Es handelt sich dabei um eine Festsattel-Scheibenbremse mit verschiebbarer Bremsscheibe. Zwei Druckkolben sind mit ihren, der Bremsscheibe abgewandten Enden, in den äußeren Bereichen einer gemeinsamen Traverse aufgenommen. Eine Kugelumlaufspindel greift in den zentralen Bereich dieser Traverse zur Betätigung und Verschleißnachstellung der Bremse ein. Diese Kugelumlaufspindel ist in dem der Bremsscheibe abgewandten, rückwärtigen Bereich des Bremssattels aufgenommen und bezüglich der wirkenden Kräfte abgestützt. Ein Ende der Kugelumlaufspindel durchdringt den Bremssattel und ist mit einer geeigneten Kontur für den Ansatz eines Bremsaktuators versehen. Dieser Aktuator kann eine elektromechanische Antriebseinheit sein oder auch eine Kombination aus Druckluftzylinder und Gestängesteller. In beiden Fällen nimmt der Aktuator die Aufgaben von Betätigung und Nachstellung des Bremsenverschleißes wahr.

Ein Nachteil hierbei kann in der geringen Belastbarkeit des Kugelumlauftriebs bestehen. Um die für die Bremsbetätigung eines schweren Nutzfahrzeugs notwendigen Zuspannkräfte (je nach Achslast zum Beispiel 150 - 250 kN) aufzubringen, ist eine äußerst massive Ausführung dieser Kugelumlaufspindel erforderliche, was mit hohen Herstellkosten verbunden ist und Einbauprobleme mit sich bringt.

Eine Doppelkolben-Scheibenbremse, bei welcher der Nachteil der übergroßen Abmessungen der Kugelumlaufspindel beseitigt ist, ist in der WO 2006/111149 beschrieben. Diese Bremse verfügt über einen schwenkbaren Zuspannhebel, welcher sich einerseits gegen das Bremsengehäuse und andererseits in Richtung zur Traverse abstützt, und eine im Kraftfluss zwischen Zuspanneinrichtung und Traverse innerhalb des Bremsengehäuses angeordnete Nachstell- und Druckspindel, welche in den zentralen Bereich der Traverse eingreift und mit dieser zum Zweck der Zuspannkraftübertragung und Verschleißnachstellung in Wirkverbindung steht.

Ein bei dieser Lösung verbleibender Nachteil kann darin bestehen, dass trotz der Verwendung eines schwenkbaren Zuspannhebels und einer im Hohlraum der Nachstellspindel angeordneten Nachsteller-Antriebseinrichtung ein sehr komplexer und störanfälliger Mechanismus dieser Nachstell- und Zuspanneinrichtung entsteht. So muss zum Beispiel bei einer Störung der Nachstellerfunktion der gesamte Mechanismus ausgewechselt werden, da die Nachsteller-Antriebseinrichtung für einen separaten Austausch nicht zugänglich ist, wodurch sich im Reparaturfall erhebliche Kosten und entsprechende Ausfallzeiten des jeweiligen Fahrzeugs ergeben können.

Ein weiterer Nachteil dieser Konstruktion kann sich aus den innen liegenden Druckstückfaltenbälgen ergeben. Die Anordnung im Inneren der Bremse soll die Faltenbälge vor mechanischer Beschädigung und übermäßiger Temperatureinwirkung schützen. Dabei wird jedoch der gravierende Nachteil in Kauf genommen, dass die Faltenbälge mit Schmutzwasser gefüllt werden können, wodurch sich die Beweglichkeit hemmende Ablagerungen bilden können und im Winter Vereisung im Inneren der Faltenbälge eintreten kann, wodurch sie bei Betätigung auch mechanisch geschädigt werden können. Ein weiterer Nachteil dieser Anordnung kann sein, dass die Faltenbälge einer Sichtprüfung nicht zugänglich sind, wodurch auch ein rechtzeitiger Austausch nicht möglich werden kann.

Ein weiteres gravierendes Problem kann dadurch hervorgerufen werden, dass die Kolbeneinheit, die aus Traverse und Druckkolben besteht, bei freier Fahrt lose auf dem Gewinde der Nachstell- und Druckspindel hängt und damit bei auftretenden Vibrationen starker Verschleiß am Gewinde entstehen kann.

Die Aufgabe der vorliegenden Erfindung besteht darin, eine verbesserte Doppelkolben-Scheibenbremse bereitzustellen, wobei die obigen Nachteile entfallen bzw. bedeutend verringert und weitere Vorteile geschaffen sind.

Die Aufgabe wird durch eine Doppelkolben-Scheibenbremse mit den Merkmalen des Anspruchs 1 gelöst.

Somit wird eine Doppelkolben-Scheibenbremse geschaffen, welche die Einfachheit, Robustheit und Wartungsfreundlichkeit einer Einstempelbremse mit den Vorteilen der Doppelkolben-Betätigung verbindet und dabei die beschriebenen Nachteile der Doppelkolben-Bauarten aus dem Stand der Technik vermeidet. Die Zahl der Einzelteile ist im Gegensatz zum Stand der Technik bedeutend vermindert.

Es ist vorgesehen, dass die Brücke einen ersten Kraftübertragungsabschnitt zur Zusammenwirkung mit dem Bremshebel und einen zweiten Kraftübertragungsabschnitt zur Zusammenwirkung mit der Nachstell-Druckspindel der Nachstelleinrichtung aufweist. Dies ermöglicht eine einfache und robuste Anpassung der Krafteinleitung durch den Bremshebel.

In einer ersten Ausführung weist der zweite Kraftübertragungsabschnitt der Brücke zur Zusammenwirkung mit der Nachstell-Druckspindel einen Verbindungsabschnitt auf, welcher als Innengewinde zur Kraftübertragung und für eine Nachstellfunktion ausgebildet ist, wobei das Innengewinde mit einem korrespondierenden Außengewinde der Nachstell-Druckspindel in Eingriff ist. Ein solches Gewinde ist leicht mit entsprechendem Werkzeug zu erstellen und in entsprechender Ausführung robust. Gleichzeitig kann es Kräfte übertragen und die Nachstellfunktion ermöglichen.

Hierbei weist die Nachstell-Druckspindel einen Druckabschnitt zur Kopplung mit der Traverse auf, wodurch ebenfalls eine einfache und robuste Bauart erzielt wird.

Bei dieser Ausführung ist es zur Führung der Kolbeneinheit notwendig, in den Innenraum der beiden Bremskolben Führungsstangen einzusetzen, welche dann gleichzeitig als Widerlager für die ebenfalls in die Bremskolben eingesetzten Rückstellfedern dienen. Die Führungsstangen sind mit ihrem der Bremsscheibe abgewandten Befestigungsabschnitten am Bremssattel fest angebracht und weisen an ihrem der Bremsscheibe zugewandten Enden Führungsabschnitte auf, welche die Abstützkräfte der Rückstellfedern aufnehmen. Jeder Bremskolben ist in Richtung seiner Längsachse relativ zu der Führungsstange mit dem Führungsabschnitt bewegbar.

Die Kolben sind mit der Traverse mit dem schwenkbaren Bremshebel ausschließlich drehbeweglich über die Brücke gekoppelt. Da die Führungsscheiben vom Gelenkpunkt des Drehhebels einen relativ großen Abstand aufweisen, wird - in an sich bekannter Weisen - mit Inkaufnahme sehr geringer Kippbewegungen der Kolbeneinheit eine einfache und sehr robuste Kolbenführung realisiert. Die Brücke träge hierbei das Muttemgewinde, in welches die Nachstell- und Druckspindel eingeschraubt ist, und überträgt damit die Zuspannkraft der Bremse vom Bremshebel über die Nachstell- und Druckspindel auf die Traverse, Bremskolben und Bremsbeläge.

In einer zweiten Ausführung steht der zweite Kraftübertragungsabschnitt der Brücke mit einem Druckabschnitt der Nachstell-Druckspindel zur Zusammenwirkung in Eingriff, wobei der Druckabschnitt der Nachstell-Druckspindel relativ zu dem zweiten Kraftübertragungsabschnitt der Brücke verdrehbar ist. Hierbei kann die Nachstell-Druckspindel bei Nachstellvorgängen nicht wie in der Ausführung durch Herausschrauben aus dem Muttergewinde axial verschoben werden, sondern ist im Falle von Nachstellvorgängen über eine Axialführung an dem Bremssattel und/oder einem Abschnitt des Bremssattels angebracht, wobei die Axialführung eine Drehbewegung (zum Beispiel ausgelöst durch die Nachstelleinrichtung automatisch oder von Hand bei Wartungsarbeiten) und eine axiale Linearbewegung der Nachstell-Druckspindel ermöglicht. Die Nachstell-Druckspindel weist dabei einen Verbindungsabschnitt zur Kopplung mit der Traverse auf, wobei der Verbindungsabschnitt als Außengewinde zur Ermöglichung einer Kraftübertragung und einer Nachstellfunktion ausgebildet ist und das Außengewinde mit einem korrespondierenden Innengewinde der Traverse in Eingriff ist. Die das Muttergewinde bzw. Innengewinde tragende Traverse kann so bei einer Verdrehung der Nachstell-Druckspindel, z.B. bei einem Nachstellvorgang zur Lüftspieljustage, auf die Bremsscheibe zu oder von dieser weg bewegt werden.

Bei Bremsbetätigungsvorgängen wird durch den Schwenkhub des Bremshebels die gesamte Zuspanneinheit mitsamt Traverse und Nachstell-Druckspindel um den Betätigungshub in Richtung Bremsscheibe verschoben. Ein Nachstellerantrieb der Nachstelleinrichtung behält dabei seine Position in dem Bremssattel bei, wodurch sich eine entsprechende Relativbewegung zwischen einem Nachstellerabtrieb der Nachstelleinrichtung und der Nachstell-Druckspindel ergibt, z.B. innerhalb der Nachstell-Druckspindel in einem Zahneingriff.

Es ist bevorzugt, dass die Nachstell-Druckspindel mit ihrer Längsachse parallel zu den Längsachsen der Bremskolben angeordnet ist.

Die Nachstelleinrichtung ist im Bremssattel von außen erreichbar und austauschbar angeordnet. Daraus ergibt sich der Vorteil, dass zum Beispiel bei einer Inspektion ein schneller Zugriff und Austausch mit Zeitersparnis möglich ist.

Jeder Bremskolben ist in einem Bereich seines jeweiligen mit dem Bremsbelag zusammenwirkenden Belagabschnitts mit einem Faltenbalg verbunden, welcher an dem Bremssattel und/oder einem mit dem Bremssattel verbundenen Abschnitt angebracht ist. Durch diese Anordnung der Faltenbälge, nämlich dass sie sich mit zunehmender Verschleißnachstellung auf die Bremsscheibe zu bewegen, wird im Inneren der Bremse Platz für ausreichend groß dimensionierte Rückstellfedern geschaffen. Die Gestaltung und Dimensionierung der Rückstellfedern stellt bei Bremsen in Doppelkolbenbauart eine besondere Schwierigkeit dar, da die Federn mit zunehmender Abnutzung der Bremsbeläge plus Bremsscheibenverschleiß zusammengedrückt werden (bis zu 50 mm). Andererseits soll jedoch auch bei unverschlissenen Bremsbelägen schon eine ausreichende Rückstellkraft erzeugt werden, um die Bremsmechanik bei Rüttelbeanspruchung zur Vermeidung von Verschleiß in Ruhe zu halten, und bei verschlissenen Bremsbelägen soll die Rückstellkraft nicht zu stark anwachsen, da sich dadurch das Ansprechverhalten der Bremse unzulässig erweitern kann. Aus diesen Bedingungen ergibt sich die Forderung nach einer sehr weichen Federcharakteristik, woraus naturgemäß ein großer Platzbedarf resultiert, der bei dieser Ausführung vorteilhaft geschaffen ist, wobei um jeden Bremskolben herum wenigstens eine Rückstellfeder zwischen der Traverse und dem Bremssattel und/oder einem Abschnitt des Bremssattels angeordnet ist.

Der Bremshebel kann als Schmiedeteil mit anschließender spanender Bearbeitung produziert werden. Aber auch eine optimierte Variante als gusstechnisch hergestellter Bremshebel mit entsprechender festigkeitsoptimierter Formgebung ist möglich, wodurch sich eine deutliche Kostenreduzierung ergibt.

In einer weiteren Ausgestaltung weist der Bremshebel Kugeln zur Abstützung am Bremssattel und zur Zusammenwirkung mit der Brücke auf, wobei die Kugeln bevorzugt in Gleitlagern aufgenommen sind. Dadurch kann sich eine stark vereinfachte Bearbeitung des Bremshebels ergeben. Es müssen zum Beispiel vier Aufnahmen für die Gleitlager der Kugeln zerspant werden, im Gegensatz zu zwei Gleitlagerstellen und zwei geschliffenen Laufflächen für übliche Rollenlager eines Bremshebels.

Die Erfindung wird nun anhand von beispielhaften Ausführungen mit Bezug auf die beigefügten Zeichnungen näher erläutert. Hierbei zeigen:
- Fig. 1: eine schematische Teilschnittdarstellung eines ersten Ausführungsbei- spiels einer erfindungsgemäßen Doppelkolben-Scheibenbremse;
- Fig. 2: eine schematische, perspektivische Schnittdarstellung von Zuspanneinheit und Kolbeneinheit mit Bremsbelag in der x-y-Ebene nach Fig. 1;
- Fig. 3: eine schematische, perspektivische Teilschnittdarstellung einer Nachstell- und Druckspindel in der y-z-Ebene nach Fig. 1;
- Fig. 4: eine perspektivische Teilansicht des Ausführungsbeispiels nach Fig. 1;
- Fig. 5: eine schematische Teilschnittdarstellung eines zweiten Ausführungsbei- spiels der erfindungsgemäßen Doppelkolben-Scheibenbremse;
- Fig. 6: eine schematische, perspektivische Schnittdarstellung von Zuspanneinheit und Kolbeneinheit mit Bremsbelag in der x-y-Ebene nach Fig. 5;
- Fig. 7: eine schematische, perspektivische Teilschnittdarstellung einer Nachstell- und Druckspindel in der y-z-Ebene nach Fig. 5;
- Fig. 8: eine perspektivische Teilansicht des Ausführungsbeispiels nach Fig. 5;
- Fig. 9: eine perspektivische Ansicht einer ersten Ausführung eines Bremshebels;
- Fig. 10: eine Seitenansicht des Bremshebels nach Fig. 9;
- Fig. 11: eine perspektivische Ansicht einer zweiten Ausführung eines Bremshe- bels; und
- Fig. 12: eine schematische, perspektivische Teilschnittdarstellung nach Fig. 6 mit der zweiten Ausführung des Bremshebels nach Fig. 11.

Bauteile bzw. -elemente, welche gleiche oder ähnliche Funktionen aufweisen, sind in den Figuren mit gleichen Bezugszeichen versehen.

Koordinaten x, y, z dienen in den Figuren zur Orientierung. Die x-Koordinate weist in Fahrtrichtung eines nicht gezeigten Fahrzeugs, die y-Koordinate weist in Richtung einer Fahrzeugbreite bzw. einer zugehörigen Radachse und die z-Koordinate weist in Höhenrichtung des Fahrzeugs.

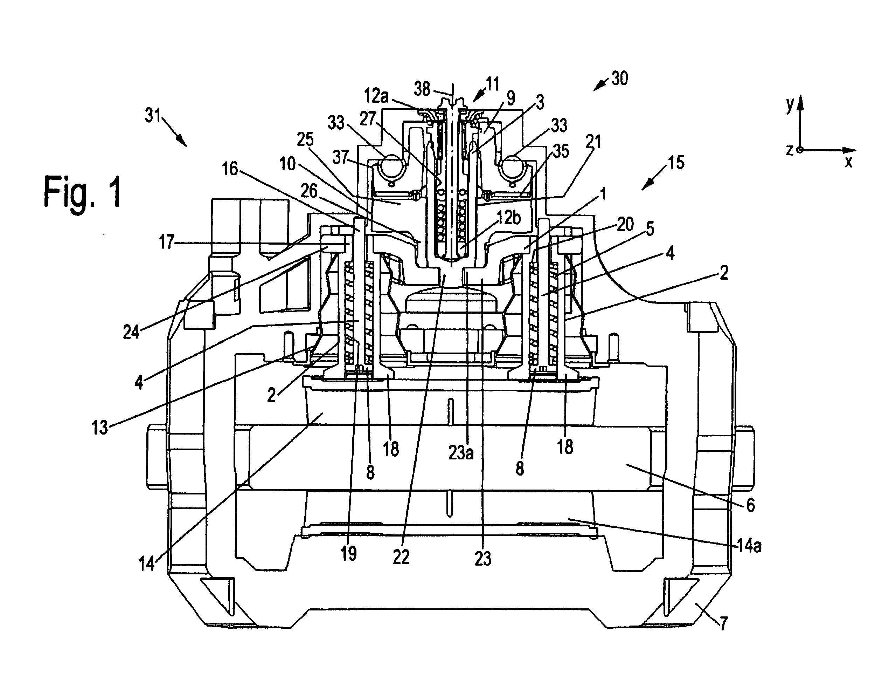

Fig. 1 ist eine schematische Teilschnittdarstellung eines ersten Ausführungsbeispiels einer erfindungsgemäßen Doppelkolben-Scheibenbremse 31.

Ein Bremssattel 7 übergreift eine Bremsscheibe 6, an welcher beidseitig Bremsbeläge 14, 14a angeordnet sind. Der eine Bremsbelag 14 steht mit Belagabschnitten 18 von Bremskolben 2 in Verbindung, und der andere Bremsbelag 14a ist über einen Belagträger im Bremssattel 7 an einem Bremsträger festgelegt. Der Bremssattel 7 ist in diesem ersten Ausführungsbeispiel ein Schiebesattel.

Die beiden Bremskolben 2 der Doppelkolben-Scheibenbremse 31 bilden mit einer Traverse 1 eine Kolbeneinheit 15, welche mit einer Zuspanneinheit 30 in Zusammenwirkung steht. Die Zuspanneinheit 30 umfasst einen Bremshebel 9, eine Brücke 10 und eine Nachstell-Druckspindel 3, welche mit der Traverse 1 in Eingriff ist. Die Kolbeneinheit 15 und die Zuspanneinheit 30 sind in dem Bremssattel 7 bzw. Bremsgehäuse angeordnet. Weiterhin ist die Nachstell-Druckspindel 3 ein Bestandteil einer Nachstelleinrichtung 11 zur Verschleißnachstellung der Doppelkolben-Scheibenbremse 31.

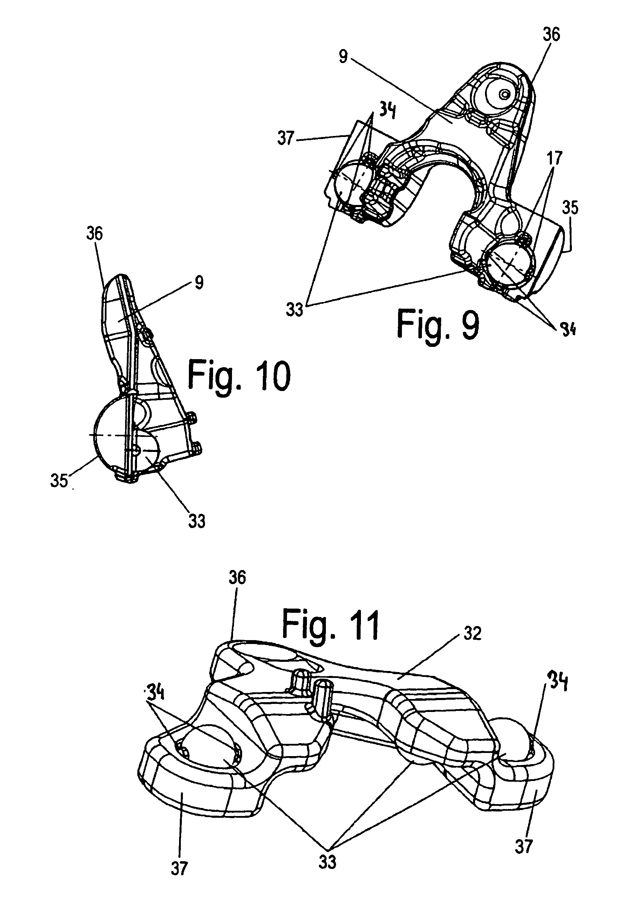

Der Bremshebel 9 wird weiter unten noch ausführlicher im Zusammenhang mit Fig. 9 bis 11 erläutert. Er weist einen Betätigungsabschnitt 36 (siehe Fig. 9 bis 11) auf und umgreift die Nachstelleinrichtung 11 gabelförmig mit Lagerabschnitten 37, in deren Oberseiten Kugeln 33 gelagert sind, mit denen der Bremshebel 9 sich am Bremssattel 7 abstützt. Die Unterseiten der Lagerabschnitte 37 sind in diesem Beispiel mit Laufflächen 35 ausgebildet, welche jeweils mit ersten Kraftübertragungsabschnitten 25 der Brücke 10 in Kontakt stehen und sich auf diesen in entsprechender Weise abwälzen können.

Die Brücke 10 weist in diesem Ausführungsbeispiel eine innere Bohrung mit einem Verbindungsabschnitt 21 in Form eines Innen- bzw. Mutterngewindes auf. Der Verbindungsabschnitt 21 steht mit einem Außengewinde der Nachstell-Druckspindel 3, welche in dieses Innengewinde hineingeschraubt ist, in Wirkverbindung zur Übertragung von Brems- und Reaktionskräften. Weiterhin ist die Nachstell-Druckspindel 3 als Bestandteil der Nachstelleinrichtung 11 durch deren Nachstellerantrieb 12a über deren Nachstellerabtrieb 12b um eine Nachstellachse 38 verdrehbar. Dazu besitzt die Nachstell-Druckspindel 3 eine Nachstelleraufnahme 27, welche einen Innenraum der Nachstell-Druckspindel 3 bildet und nach oben geöffnet ist. Die Nachstelleinrichtung 11 ist im Bremssattel 7 von außen leicht erreichbar und austauschbar angeordnet. Der Nachstellerabtrieb 12b ist innerhalb der Nachstelleraufnahme 27 zum Beispiel mit einer Innenverzahnung so im Eingriff, dass er Drehmomente zur Verdrehung der Nachstell-Druckspindel 3 übertragen kann und gleichzeitig Relativbewegungen der Nachstell-Druckspindel 3 in axialer Richtung der Nachstellachse 38 gestattet. Bei einem Nachstellvorgang wird die Nachstell-Druckspindel 3 in dem Innengewinde des Verbindungsabschnitts 21 in die Brücke 10 hineingedreht und führt dabei eine Linearbewegung in Richtung der Nachstellachse 38 zur Bremsscheibe 6 hin aus.

Zur Übertragung von Druckkräften in Zusammenwirkung mit der Traverse 1 ist die Nachstell-Druckspindel 3 an ihrem unteren Ende mit einem Durchmesser ausgebildet, der kleiner als der Außendurchmesser der Nachstell-Druckspindel 3 ist, wodurch ein Druckabschnitt 22 mit einer Schulter gebildet ist. Die Traverse 1 ist in einem Mittelabschnitt 23 mit einer Durchgangsbohrung mit diesem kleineren Durchmesser versehen, in welche das untere Ende der Nachstell-Druckspindel 3 mit dem Druckabschnitt 22 verdrehbar eingesetzt ist. Der Mittelabschnitt 23 der Traverse 1 weist um diese Bohrung herum Krafteinleitungsabschnitte 23a auf, welche mit dem Druckabschnitt 22 der Nachstell-Druckspindel 3 in Kontakt stehen. Links und rechts von dem Mittelabschnitt 23 ist jeweils ein Endabschnitt 24 nach oben gekröpft ausgebildet, in welchem jeweils ein Bremskolben 2 mit einem Halteabschnitt 17 befestigt ist.

Die Bremskolben 2 sind jeweils mit einem Innenraum 19 versehen, der nach unten in den Belagabschnitt 18 mündet und sich nach oben mit einem etwa halb so großen Durchmesser durch den Halteabschnitt 18 erstreckt. In jedem Innenraum 19 ist jeweils eine Führungsstange 4 angeordnet, deren unteres Ende mit einem Führungsabschnitt 8 versehen ist, dessen Außendurchmesser mit dem Innendurchmesser des Innenraums 19 korrespondiert. Die oberen Abschnitte der Führungsstangen 4 erstrecken sich durch den Halteabschnitt 18 hindurch und sind im Bremssattel 7 mit Befestigungsabschnitten 16 festgelegt. Jeweils ein Führungsabschnitt 8 dient auch als Widerlager für jeweils eine Rückstellfeder 5, die sich an einer Schulter 20 an der Oberseite des Innenraums 19 abstützt. Die Bremskolben 2 sind mit der Traverse 1 in y-Richtung bewegbar, wobei die Führungsstangen 4 mit den Führungsabschnitten 8 fest mit dem Bremssattel 7 verbunden sind und eine Führung der Bremskolben 2 mittels der Führungsabschnitte 8 ermöglichen. Die Führungsabschnitte 8 sind vom Gelenkpunkt des Bremshebels 9 (in den Lagerabschnitten 37) mit einer relativ großen Entfernung beabstandet. Es wird dabei eine sehr geringe Kippbewegung der Kolbeneinheit 15 in Kauf genommen, wobei eine einfache und robuste Bremskolbenführung realisiert ist.

Um jeden Bremskolben 2 herum ist jeweils ein Faltenbalg 13 angeordnet, welcher mit seinem jeweiligen oberen Ende an einem jeweiligen Endabschnitt 24 der Traverse 1 und mit seinem jeweiligen unteren Ende am Bremssattel 7 bzw. eines Abschnitts von diesem oder eines mit dem Bremssattel 7 fest verbundenen Teils angebracht ist.

Bei einer Bremsenbetätigung verläuft die Kraftübertragung von dem Bremshebel 9 über die Laufflächen 35 in die ersten Kraftübertragungsabschnitte 25 der Brücke 10, welche mit zweiten Kraftübertragungsabschnitten 26 die Kraft über den Verbindungsabschnitt 21 in die Nachstell-Druckspindel 3 einleitet. Von dort verläuft die Kraftübertragung durch den Druckabschnitt 22 in die Krafteinleitungsabschnitte 23a des Mittelabschnitts 23 der Traverse 1, welche die Kraft über ihre Endabschnitte 24 in die Bremskolben 2 und somit auf den Bremsbelag 14 und gleichzeitig aufgrund des Schiebe-Bremssattels 7 auf Bremsbelag 14a überträgt.

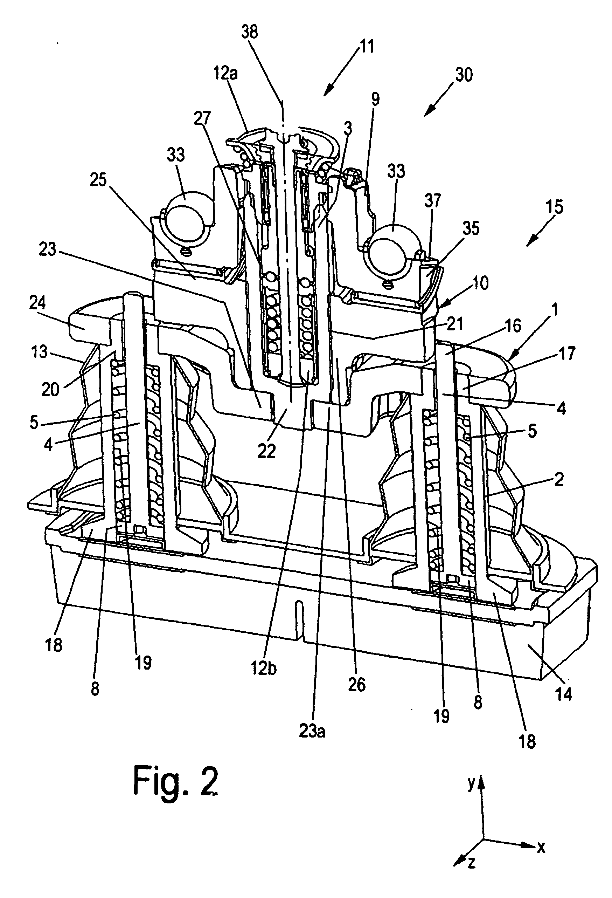

Fig. 2 zeigt eine schematische, perspektivische Schnittdarstellung von Zuspanneinheit 30 und Kolbeneinheit 15 mit Bremsbelag 14 in der x-y-Ebene nach Fig. 1, wobei der Bremssattel 7 nicht dargestellt ist. Die unteren Enden der Faltenbälge 13 sind auf einer Art Platte befestigt, die fest mit dem Bremssattel 7 verbunden ist. Die Endabschnitte 24 der Traverse 1 sind an ihren Enden abgerundet, um eine platzsparende Einbaumöglichkeit zu schaffen. Die Laufflächen 35 des Bremshebels 9 wirken mit korrespondierenden Halbschalen bzw. -flächen der ersten Kraftübertragungsabschnitte 25 der Brücke 10 zusammen. Die Brücke 10 ist mit zweiten Kraftübertragungsabschnitten 26 so ausgebildet, dass diese sich nach unten mit einem geringeren Außendurchmesser angepasst an den Mittelabschnitt 23 der Traverse 1 erstrecken. Dadurch wird eine Verlängerung des Verbindungsabschnitts 21 zur Kraftübertragung auf die Nachstell-Druckspindel geschaffen. In dieser Stellung ist noch keine Verschleißnachstellung erfolgt. Die Kraftübertragung von der Brücke 10 verläuft über die Nachstell-Druckspindel 3 in die Traverse 1.

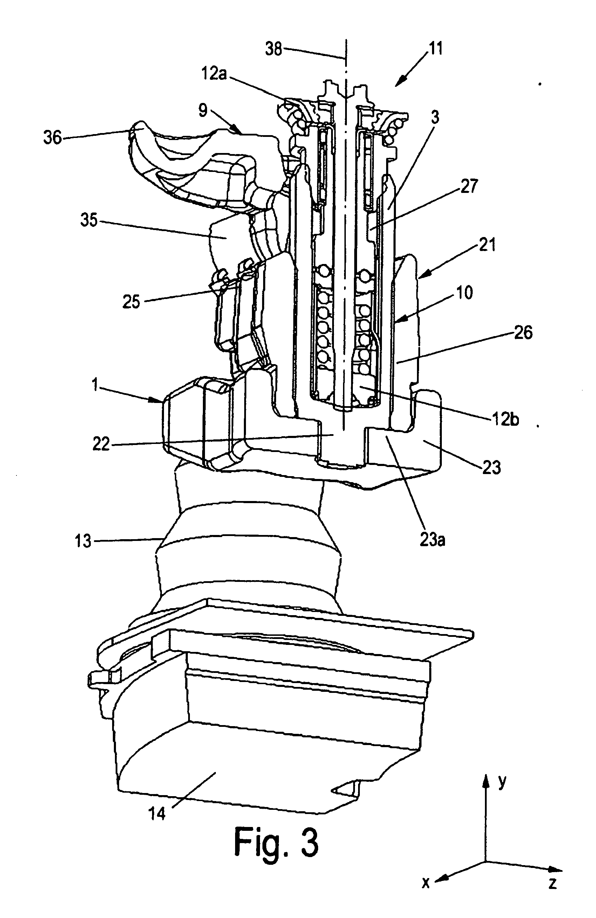

In Fig. 3 ist eine schematische, perspektivische Teilschnittdarstellung der Nachstell- und Druckspindel 3 in der y-z-Ebene nach Fig. 1 illustriert, wobei der Betätigungsabschnitt 36 des Bremshebels 9 gezeigt ist.

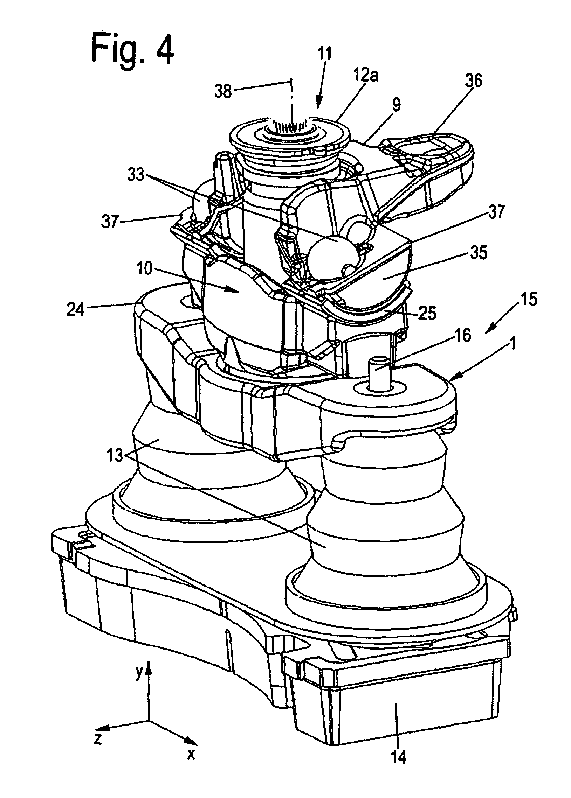

Schließlich zeigt Fig. 4 noch eine perspektivische Teilansicht des ersten Ausführungsbeispiels nach Fig. 1 ohne den Bremssattel 7, in welchen die sich durch die Endabschnitte 24 der Traverse 1 erstreckenden Halteabschnitte 16 der Führungsstangen 4 befestigt werden. Die Doppelkolben-Scheibenbremse 31 ist einfach und robust ausgebildet, wie aus Fig. 4 deutlich wird.

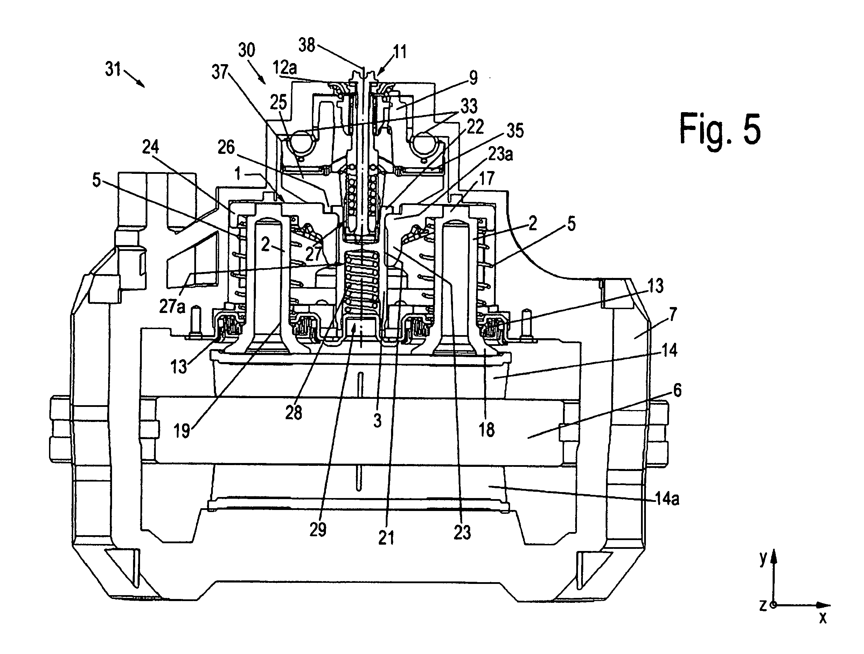

In Fig. 5 ist eine schematische Teilschnittdarstellung eines zweiten Ausführungsbeispiels der erfindungsgemäßen Doppelkolben-Scheibenbremse 31 dargestellt.

In diesem zweiten Ausführungsbeispiel entspricht der Bremshebel 9 dem unter Fig. 1 beschriebenen. Die Bremskolben 2 sind in der Traverse 1 aufgenommen, wie ebenfalls bereits erläutert.

Im Unterschied zum ersten Ausführungsbeispiel weist die Brücke 10 keinen Verbindungsabschnitt 21 auf, sondern wirkt mit ihrem zweiten Kraftübertragungsabschnitt 26 direkt mit einem Druckabschnitt 22 der Nachstell-Druckspindel 3 zusammen, wobei der Druckabschnitt 22 im Gegensatz zum ersten Ausführungsbeispiel hier am oberen Ende der Nachstell-Druckspindel 3 mit einem Kragen ausgebildet ist und mit der Brücke 10 zusammenwirkt. Dabei ist der Druckabschnitt 22 in dem zweiten Kraftübertragungsabschnitt 26 um die Nachstellachse 38 drehbar angeordnet.

Der Verbindungsabschnitt 21 mit einem Innengewinde ist im Mittelabschnitt 23 der Traverse 1 angeordnet. Dabei ist dieser Mittelabschnitt 23 in Richtung der Nachstellachse 38 nach oben und unten gegenüber dem ersten Ausführungsbeispiel verlängert. In dem Verbindungsabschnitt 21 ist die Nachstell-Druckspindel 3 mit entsprechendem Außengewinde, das sich in ihrem oberen Drittel befindet, eingeschraubt. Sie besitzt die Nachstellaufnahme 27 in ihrem oberen Abschnitt, in welchem der Nachstellabtrieb 12b wie bereits erläutert angeordnet ist. Die Nachstellaufnahme der Nachstell-Druckspindel 27 ist mit einem Boden abgeschlossen, welcher eine Wand zu einem sich darunter anschließenden weiteren Innenraum als Federaufnahme 27a bildet. Das untere Ende der Nachstell-Druckspindel 3 ist zu der Federaufnahme 27a hin geöffnet und in Zusammenwirkung mit einer Axialführung 29 angeordnet, welche eine Auflage für eine Feder 28 bildet, die in der Federaufnahme 27a angeordnet ist. Die Axialführung 29 ermöglicht eine Axialführung der Nachstell-Druckspindel 3 und gleichzeitig eine Abstützung.

Die Bremskolben 2 sind jeweils mit zumindest einer Rückstellfeder 5 umgeben. Die Rückstellfedern 5 stützen sich mit ihren oberen Enden jeweils an einem Endabschnitt 24 der Traverse 1 ab. Ihre unteren Enden liegen auf dem Bremssattel 7 bzw. einem Abschnitt, der fest mit dem Bremssattel 7 verbunden ist (z.B. eine Platte), auf. Zwischen diesem Abschnitt bzw. der Platte und einem jeweiligen Belagabschnitt 18 der Bremskolben 2 ist jeweils ein Faltenbalg 13 angeordnet, welcher sich bei Bremsbetätigung bzw. Nachstellung in y-Richtung bewegt.

Bei einer Nachstellung wird die Nachstell-Druckspindel 3 wie oben beschrieben verdreht. Durch ihre Kopplung im Verbindungsabschnitt 21 mit der Traverse 1 wird nun im Gegensatz zum ersten Ausführungsbeispiel die Traverse 1 in y-Richtung verstellt.

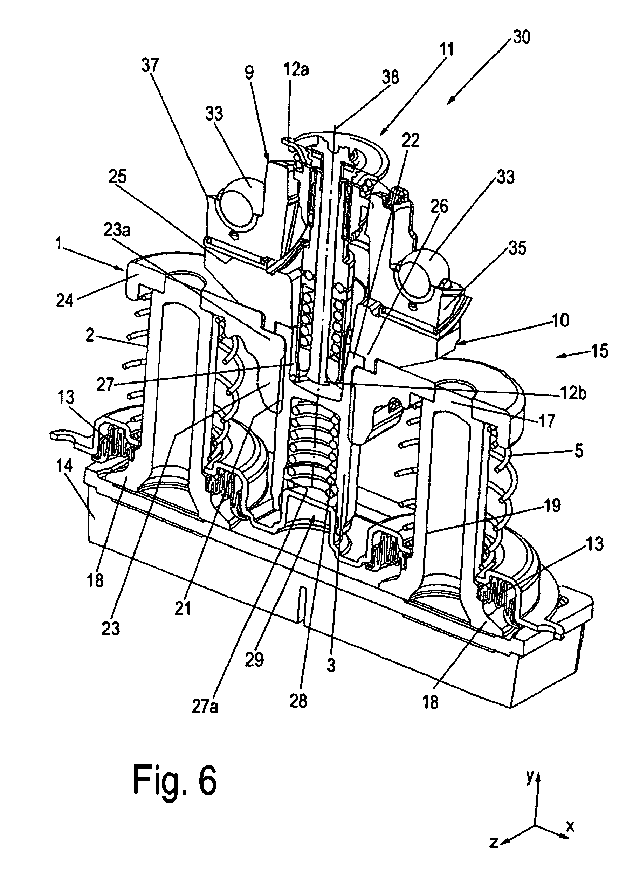

Die Kraftübertragung wird nun im Zusammenhang mit Fig. 6 erläutert. Fig. 6 zeigt ähnlich wie Fig. 2 eine schematische, perspektivische Schnittdarstellung von Zuspanneinheit 30 und Kolbeneinheit 15 mit Bremsbelag 14 in der x-y-Ebene nach Fig. 5.

Der Bremshebel 9 überträgt die in ihn eingeleitete Zuspannkraft wie beim ersten Ausführungsbeispiel beschrieben auf die Brücke 10. Der zweite Kraftübertragungsabschnitt 26 der Brücke 10 leitet die Kraft auf den Druckabschnitt 22 der Nachstell-Druckspindel 3, welche über ihr Außengewinde die Kraft über den Verbindungsabschnitt 21 in die Traverse 1 und wie oben beschrieben in die Bremskolben 2 überträgt. Der Krafteinleitungsabschnitt 23a der Traverse 1 ist in diesem Beispiel mit dem Verbindungsabschnitt 21 verbunden und erhält von diesem die eingeleitete Kraft.

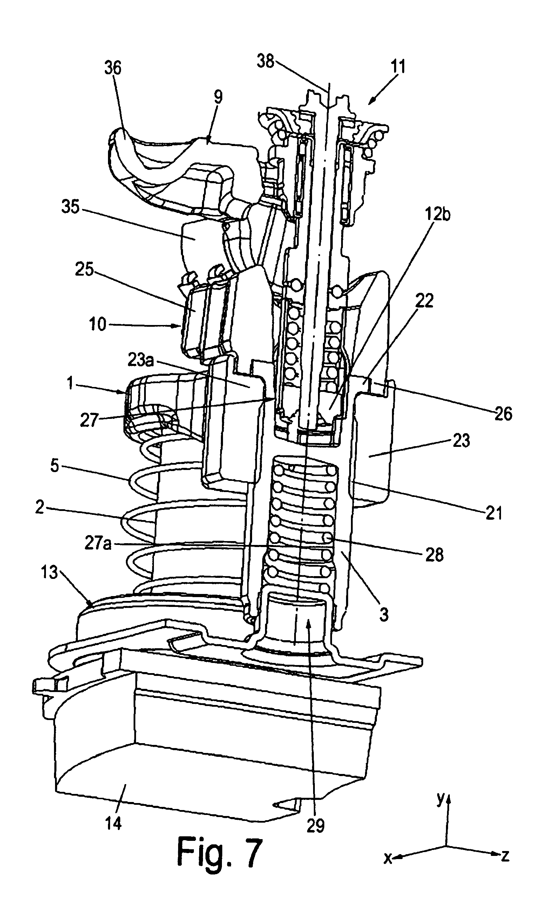

Fig. 7 illustriert eine schematische, perspektivische Teilschnittdarstellung der Nachstell- und Druckspindel 3 in der y-z-Ebene des zweiten Ausführungsbeispiels nach Fig. 5. Die Axialführung 29 ist hier als ein Bestandteil der Platte, die mit dem Bremssattel 7 (hier nicht gezeigt) verbunden ist. Die Axialführung 29 ist als Zylindervorsprung ausgebildet, dessen Außendurchmesser zu dem Innendurchmesser der Federaufnahme 27a der Nachstell-Druckspindel 3 korrespondiert. Es ist wie in Fig. 3 eine nicht nachgestellte Nachstell-Druckspindel 3 gezeigt. Die Brücke 10 steht über den Druckabschnitt 22 und dann über den Verbindungsabschnitt 21 mit der Traverse 1 in Zusammenwirkung. Die Feder 28 wirkt zur Rückstellkraft wie auch zum Zusammenhalt der Anordnung, um Vibrationseinflüsse möglichst gering zu halten.

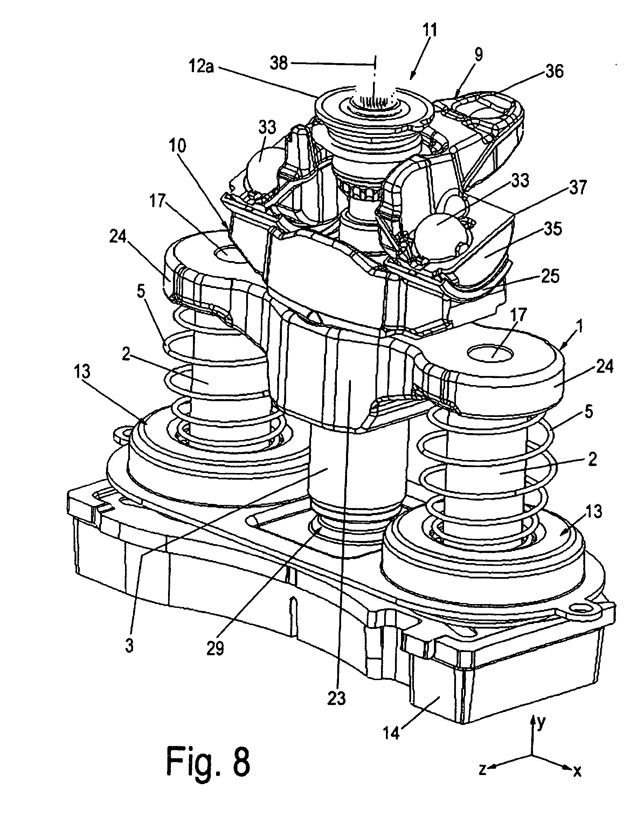

Fig. 8 illustriert schließlich eine perspektivische Teilansicht des zweiten Ausführungsbeispiels nach Fig. 5 in seinem einfachen und robusten Aufbau.

Der in den Figuren 1 bis 8 dargestellte Bremshebel kann als Schmiedeteil mit anschließender spanender Bearbeitung hergestellt werden. Fig. 9 zeigt eine perspektivische Ansicht dieses Bremshebels 9 in einer ersten Ausführung von oben und Fig. 10 eine Seitenansicht dazu.

Der Bremshebel 9 ist gabelförmig mit zwei Lagerabschnitten 37 und einem Betätigungsabschnitt 36 ausgebildet. Der Betätigungsabschnitt 36 ist zur Zusammenwirkung mit unterschiedlichen Betätigungseinrichtungen ausgebildet.

Die Lagerabschnitte 37 weisen an ihren Oberseiten Kugeln 33 auf, die in Gleitlagern 34 aufgenommen sind. Die Unterseiten der Lagerabschnitte 37 sind mit halbzylinderförmigen Laufflächen 35 versehen, die geschliffen (und endbearbeitet) sind.

Fig. 11 illustriert eine perspektivische Ansicht einer zweiten Ausführung des Bremshebels 9 von unten gesehen. Hierbei sind weitere Kugeln 33 anstelle der Laufflächen 35 in die Lagerabschnitte 37 eingesetzt. Sie sind ebenfalls in Gleitlager 34 aufgenommen. Damit kann eine stark vereinfachte Bearbeitung des Bremshebels 9 erzielt werden, da nur die Zerspanung der Gleitlager 34 erforderlich ist und Schleifen (und Endbearbeiten) von Laufflächen 35 entfallen kann.

Bei den beschriebenen Ausführungen der Doppelkolben-Scheibenbremse 31 ist die Nachstelleinrichtung 11 von außen zugänglich und bei Bedarf austauschbar, wobei keine anderen Teile von Zuspanneinrichtung 30 und Kolbeneinheit 15 demontiert werden müssen.

Die Anordnung und Gestaltung der Rückstellfedern 5 kann so ausgeführt werden, dass
a) eine Dimensionierung auf ausreichende Rückstellkraft bei vertretbar geringer Kraftänderung über dem Verschleißweg der Bremse möglich ist. Z.B. sollte bei einem Gewicht der Kolbeneinheit 15 (Traverse 1 und Bremskolben 2) von 3 kg die mittlere Rückstellkraft beider Bremskolben 2 (d.h. bei halbverschlissener Bremse) ca. 650 N betragen mit einer Gesamt-Federrate von ca. 8 N/mm.
b) der Kraftfluss der Rückstellfederkraft wie folgt verläuft: Von der Traverse 1 auf die Nachstell-Druckspindel 3, von dort auf die Brücke 10 über die Laufflächen 35 bzw. unteren Kugeln 33 in den Bremshebel 9, dann weiter über die Gleitlager 34 in die oberen Kugeln 33 und von dort in den Bremssattel 7 bzw. das Bremsengehäuse.

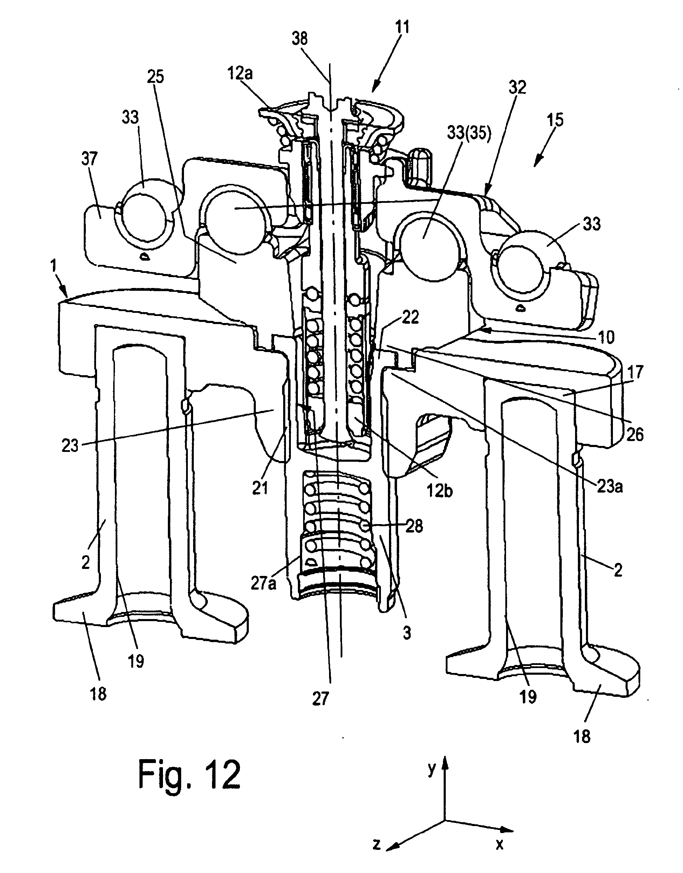

Dazu zeigt Fig. 12 eine schematische, perspektivische Teilschnittdarstellung nach Fig. 6 mit der zweiten Ausführung des Bremshebels 9 nach Fig. 11.

Die Rückstellfedern können so ausreichend dimensioniert werden, dass sei einerseits die Zuspanneinheit 30 in jedem Zustand zur Vermeidung von verschleißbedingten Störungen gegen wirkende Rüttelkräfte in Ruhe halten und andererseits bei zunehmendem Bremsenverschleiß kein zu starkes Anwachsen der Rückstellkraft herrufen, welches das Ansprechverhalten der Doppelkolben-Scheibenbremse 31 unzulässig beeinflussen könnte.

Die Erfindung ist nicht auf die oben beschriebenen Ausführungsbeispiele beschränkt. Sie ist im Rahmen der beigefügten Ansprüche modifizierbar.

So kann zum Beispiel der Bremshebel 9 in einer optimierten Variante gusstechnisch mit einer entsprechenden festigkeitsoptimierten Formgebung produziert werden. Hierdurch werden Kosten und Fertigungsaufwand reduziert.

### Bezugszeichenliste

- 1: Traverse
- 2: Kolben
- 3: Nachstell-/Druckspindel
- 4: Führungsstange
- 5: Rückstellfeder
- 6: Bremsscheibe
- 7: Bremssattel
- 8: Führungsabschnitt
- 9: Bremshebel
- 10: Brücke
- 11: Nachstelleinrichtung
- 12a: Nachstellerantrieb
- 12b: Nachstellerabtrieb
- 13: Faltenbalg
- 14, 14a: Bremsbelag
- 15: Kolbeneinheit
- 16: Befestigungsabschnitt
- 17: Halteabschnitt
- 18: Belagabschnitt
- 19: Innenraum
- 20: Schulter
- 21: Verbindungsabschnitt
- 22: Druckabschnitt
- 23: Mittelabschnitt
- 23a: Krafteinleitungsabschnitt
- 24: Endabschnitt
- 25: Erster Kraftübertragungsabschnitt
- 26: Zweiter Kraftübertragungsabschnitt
- 27: Nachstelleraufnahme
- 27a: Federaufnahme
- 28: Feder
- 29: Axialbefestigung
- 30: Zuspanneinheit
- 31: Scheibenbremse
- 32: Hebel
- 33: Kugel
- 34: Gleitlager
- 35: Lauffläche
- 36: Betätigungsabschnitt
- 37: Lagerabschnitt
- 38: Nachstellachse
- x, y, z: Koordinaten

## Patentansprüche

1. Doppelkolben-Scheibenbremse (31) für ein Fahrzeug, insbesondere ein Nutzfahrzeug, mit:
a) einem eine Bremsscheibe (6) vorzugsweise rahmenartig übergreifenden Bremssattel (7);
b) zwei Bremskolben (2), welche zur Aufbringung einer Zuspannkraft auf wenigstens einen Bremsbelag (14, 14a) in Richtung der Bremsscheibe (6) in dem Bremssattel (7) beweglich angeordnet sind;
c) einer Traverse (1), welche mit den zwei Bremskolben (2) gekoppelt ist;
d) einer Zuspanneinheit (30), welche einen Bremshebel (9), eine Brücke (10) und eine Nachstelleinrichtung (11) aufweist; **dadurch gekennzeichnet dass**
e) der Bremshebel (9) gabelförmig die Nachstelleinrichtung (11) umgreift und mit der Brücke (10) in Wirkverbindung steht, und
f) die Brücke (10) über eine Nachstell-Druckspindel (3) der Nachstelleinrichtung (11) mit der Traverse (1) gekoppelt ist.

2. Doppelkolben-Scheibenbremse (31) nach Anspruch 1, **dadurch gekennzeichnet, dass** die Brücke (10) einen ersten Kraftübertragungsabschnitt (25) zur Zusammenwirkung mit dem Bremshebel (9) und einen zweiten Kraftübertragungsabschnitt (26) zur Zusammenwirkung mit der Nachstell-Druckspindel (3) der Nachstelleinrichtung (11) aufweist.

3. Doppelkolben-Scheibenbremse (31) nach Anspruch 2, **dadurch gekennzeichnet, dass** der zweite Kraftübertragungsabschnitt (26) der Brücke (10) zur Zusammenwirkung mit der Nachstell-Druckspindel (3) einen Verbindungsabschnitt (21) aufweist, welcher als Innengewinde zur Kraftübertragung und für eine Nachstellfunktion ausgebildet ist, wobei das Innengewinde mit einem korrespondierenden Außengewinde der Nachstell-Druckspindel (3) in Eingriff ist.

4. Doppelkolben-Scheibenbremse (31) nach Anspruch 3, **dadurch gekennzeichnet, dass** die Nachstell-Druckspindel (3) einen Druckabschnitt (22) zur Kopplung mit der Traverse (1) aufweist.

5. Doppelkolben-Scheibenbremse (31) nach einem der Ansprüche 1 bis 4, **dadurch gekennzeichnet, dass** jeder der beiden Bremskolben (2) mit jeweils einer Führungsstange (4) versehen ist, wobei jede Führungsstange (4) mit wenigstens einem Führungsabschnitt (8) an einem der Bremsscheibe (6) zugewandten Ende jeweils in einem Innenraum (19) eines der Bremskolben (2) angeordnet und mit einem dem Führungsabschnitt (8) gegenüber liegenden Befestigungsabschnitt (16) am Bremssattel (7) angebracht ist, wobei jeder Bremskolben (2) in Richtung seiner Längsachse relativ zu der Führungsstange (4) mit dem Führungsabschnitt (8) bewegbar ist.

6. Doppelkolben-Scheibenbremse (31) nach Anspruch 5, **dadurch gekennzeichnet, dass** in dem jeweiligen Innenraum (19) eines jeden Bremskolbens (2) wenigstens eine Rückstellfeder (5) zwischen dem jeweiligen Führungsabschnitt (8) der Führungsstange (4) und einer Schulter (20) des jeweiligen Bremskolbens (2) angeordnet ist.

7. Doppelkolben-Scheibenbremse (31) nach Anspruch 2, **dadurch gekennzeichnet, dass** der zweite Kraftübertragungsabschnitt (26) der Brücke (10) mit einem Druckabschnitt (22) der Nachstell-Druckspindel (3) zur Zusammenwirkung in Eingriff steht, wobei der Druckabschnitt (22) der Nachstell-Druckspindel (3) relativ zu dem zweiten Kraftübertragungsabschnitt (26) der Brücke (10) verdrehbar ist.

8. Doppelkolben-Scheibenbremse (31) nach Anspruch 7, **dadurch gekennzeichnet, dass** die Nachstell-Druckspindel (3) einen Verbindungsabschnitt (21) zur Kopplung mit der Traverse (1) aufweist, wobei der Verbindungsabschnitt (21) als Außengewinde zur Ermöglichung einer Kraftübertragung und einer Nachstellfunktion ausgebildet ist und das Außengewinde mit einem korrespondierenden Innengewinde der Traverse (1) in Eingriff ist.

9. Doppelkolben-Scheibenbremse (31) nach Anspruch 8, **dadurch gekennzeichnet, dass** die Nachstell-Druckspindel (3) über eine Axialführung (29) an dem Bremssattel (7) und/oder einem mit dem Bremssattel (7) verbundenen Abschnitt angebracht ist, wobei die Axialführung (29) eine Drehbewegung und eine axiale Linearbewegung der Nachstell-Druckspindel (3) ermöglicht.

10. Doppelkolben-Scheibenbremse (31) nach einem der Ansprüche 7 bis 9, **dadurch gekennzeichnet, dass** um jeden Bremskolben (2) herum wenigstens eine Rückstellfeder (5) zwischen der Traverse (1) und dem Bremssattel (7) und/oder einem mit dem Bremssattel (7) verbundenen Abschnitt angeordnet ist.

11. Doppelkolben-Scheibenbremse (31) nach einem der Ansprüche 7 bis 10, **dadurch gekennzeichnet, dass** jeder Bremskolben (2) in einem Bereich seines jeweiligen mit dem Bremsbelag (14) zusammenwirkenden Belagabschnitts (18) mit einem Faltenbalg (13) verbunden ist, welcher an dem Bremssattel (7) und/oder einem mit dem Bremssattel (7) verbundenen Abschnitt angebracht ist.

12. Doppelkolben-Scheibenbremse (31) nach einem der vorhergehenden Ansprüche, **dadurch gekennzeichnet, dass** die Nachstell-Druckspindel (3) mit ihrer Längsachse parallel zu den Längsachsen der Bremskolben (2) angeordnet ist.

13. Doppelkolben-Scheibenbremse (31) nach einem der vorhergehenden Ansprüche, **dadurch gekennzeichnet, dass** der Bremshebel (9) Kugeln (33) zur Abstützung am Bremssattel (7) und zur Zusammenwirkung mit der Brücke (10) aufweist.

14. Doppelkolben-Scheibenbremse (31) nach Anspruch 13, **dadurch gekennzeichnet, dass** die Kugeln (33) in Gleitlagern (34) aufgenommen sind.

15. Doppelkolben-Scheibenbremse (31) nach einem der vorhergehenden Ansprüche, **dadurch gekennzeichnet, dass** der Bremshebel (9) als bearbeitetes Schmiedeteil oder als Gussteil ausgebildet ist.

16. Doppelkolben-Scheibenbremse (31) nach einem der vorhergehenden Ansprüche, **dadurch gekennzeichnet, dass** die Nachstelleinrichtung (11) im Bremssattel (7) von außen erreichbar und austauschbar angeordnet ist.

## Claims

1. Double piston disc brake (31) for a vehicle, particularly a utility vehicle, with:
a) a brake calliper (7) overlapping a brake disc preferably in a frame-like manner;
b) two brake pistons (2), which are arranged in a movable manner in the brake calliper (7) for applying an application force to at least one brake pad (14, 14a) in the direction of the brake disc (6);
c) a cross beam (1) that is coupled to the two brake pistons (2);
d) an application unit (30), which has a brake lever (9), a bridge (10) and a readjusting device (11); **characterised in that**
e) the brake lever (9) encompasses the readjusting device (11) in a forked manner and is in operative connection with the bridge (10); and
f) the bridge (10) is coupled to the cross beam (1) via a readjusting pressure spindle (3) of the readjusting device (11).

2. Double piston disc brake (31) according to claim 1, **characterised in that** the bridge (10) has a first force transfer section (25) for cooperation with the brake lever (9) and a second force transfer section (26) for cooperation with the readjusting pressure spindle (3) of the readjusting device (11).

3. Double piston disc brake (31) according to claim 2, **characterised in that** the second force transfer section (26) of the bridge (10) has a connection section (21) for cooperation with the readjusting pressure spindle (3), which connection section is formed as an inner thread for the force transfer and for a readjusting function, wherein the inner thread is in engagement with a corresponding outer thread of the readjusting pressure spindle (3).

4. Double piston disc brake (31) according to claim 3, **characterised in that** the readjusting pressure spindle (3) has a pressure section (22) for coupling to the cross beam (1).

5. Double piston disc brake (31) according to one of claims 1 to 4, **characterised in that** each of the two brake pistons (2) is provided with respectively one guide rod (4), wherein each guide rod (4) is arranged at an end facing the brake disc (6) with at least one guide section (8) respectively in an interior (19) of one of the brake pistons (2) and is mounted to the brake calliper (7) with a fastening section (16) opposite the guide section (8), wherein each brake piston (2) can be moved in the direction of its longitudinal axis relative to the guide rod (4) with the guide section (8).

6. Double piston disc brake (31) according to claim 5, **characterised in that** at least one reset spring is arranged in the respective interior (19) of each brake piston (2) between the respective guide section (8) of the guide rod (4) and a shoulder (20) of the respective brake piston (2).

7. Double piston disc brake (31) according to claim 2, **characterised in that** the second force transfer section (26) of the bridge (10) is in engagement with a pressure section (22) of the readjusting pressure spindle (3) for cooperation, wherein the pressure section (22) of the readjusting pressure spindle (3) can be rotated relative to the second force transfer section (26) of the bridge (10).

8. Double piston disc brake (31) according to claim 7, **characterised in that** the readjusting pressure spindle (3) has a connection section for coupling to the cross beam (1), wherein the connection section (21) is formed as an outer thread for enabling a force transfer and a readjusting function and the outer thread is in engagement with a corresponding inner thread of the cross beam (1).

9. Double piston disc brake (31) according to claim 8, **characterised in that** the readjusting pressure spindle (3) is mounted to the brake calliper (7) and/or a section connected to the brake calliper (7) by means of an axial guide (29), wherein the axial guide (29) enables a rotational movement and an axial linear movement of the readjusting pressure spindle (3).

10. Double piston disc brake (31) according to one of claims 7 to 9, **characterised in that** at least one reset spring (5) is arranged around each brake piston (2) between the cross beam (1) and the brake calliper (7) and/or a section connected to the brake calliper (7).

11. Double piston disc brake (31) according to one of claims 7 to 10, **characterised in that** each brake piston (2) is connected to a bellows (13) in a region of its respective pad section (18) cooperating with the brake pad (14), which bellows is mounted to the brake calliper (7) and/or a section connected to the brake calliper (7).

12. Double piston disc brake (31) according to one of the preceding claims, **characterised in that** the readjusting pressure spindle (3) is arranged parallel to the longitudinal axes of the brake pistons (2) with its longitudinal axis.

13. Double piston disc brake (31) according to one of the preceding claims, **characterised in that** the brake lever (9) has balls (33) for the support at the brake calliper (7) and for cooperation with the bridge (10).

14. Double piston disc brake (31) according to claim 13, **characterised in that** the balls (33) are received in slide bearings (34).

15. Double piston disc brake (31) according to one of the preceding claims, **characterised in that** the brake lever (9) is formed as a finished forged part or as a cast part.

16. Double piston disc brake (31) according to one of the preceding claims, **characterised in that** the readjusting device (11) in the brake calliper (7) is arranged to be reached from the outside and in an exchangeable manner.

## Revendications

1. Frein à disque à double piston (31) pour un véhicule, en particulier un véhicule utilitaire, comprenant :
a) un étrier (7) de frein, qui chevauche, de préférence, un disque de frein (6) de manière d'un cadre ;
b) deux pistons de frein (2) disposés de façon mobile dans ledit étrier de frein (7) pour l'application d'un effort de serrage sur au moins une garniture de frein (14, 14a) en un sens vers ledit disque de frein (6) ;
c) une traverse (1) accouplée auxdits deux pistons de frein (2) ;
d) une unité de serrage (30) comprenant un levier de frein (9), un pont (10) et un dispositif de rattrapage (11) ;
**caractérisé en ce**
e) **que** ledit levier de frein entoure ledit dispositif de rattrapage (11) sous forme d'une fourchette et se trouve en liaison opérative avec ledit pont (10), et
f) **que** ledit pont (10) est accouplé via une broche de compression de rattrapage (3) dudit dispositif de rattrapage (11) à ladite traverse (1).

2. Frein à disque à double piston (31) selon la revendication 1, **caractérisé en ce que** ledit pont (10) comprend une première partie de transmission d'effort (25) pour l'interaction avec ledit levier de frein (9) et une deuxième partie de transmission d'effort (26) pour l'interaction avec ladite broche de compression de rattrapage (3) dudit dispositif de rattrapage (11).

3. Frein à disque à double piston (31) selon la revendication 2, **caractérisé en ce que** ladite deuxième partie de transmission d'effort (26) dudit pont (10) présente une partie de liaison (21) pour l'interaction avec ladite broche de compression de rattrapage (3), qui est configurée sous forme d'un filet de vis intérieur pour la transmission d'efforts et pour une fonction de rattrapage, audit filet de vis intérieur se trouvant en prise dans un filet de vis extérieur correspondant de ladite broche de compression de rattrapage (3).

4. Frein à disque à double piston (31) selon la revendication 3, **caractérisé en ce que** ladite broche de compression de rattrapage (3) comprend une partie de pression (22) pour l'accouplage à ladite traverse (1).

5. Frein à disque à double piston (31) selon une quelconque des revendications 1 à 4, **caractérisé en ce que** chacun desdits deux pistons de frein (2) est doté d'une tige de guidage respective (4), dans lequel chaque tige de guidage (4) est disposée, par au moins une partie de guidage (8), à une extrémité en face dudit disque de frein dans un espace intérieur respectif (19) d'un desdits pistons de frein (2) audit étrier de frein (7) par une partie de fixation opposée à ladite partie de guidage (8), à chaque piston de frein (2) étant mobile en sens de son axe longitudinal relativement à ladite tige de guidage (4) avec ladite partie de guidage (8).

6. Frein à disque à double piston (31) selon la revendication 5, **caractérisé en ce qu'**au moins un ressort de retour (5) est disposé dans ledit espace intérieur respectif (19) de chacun desdits pistons de frein (2) entre ladite partie de guidage respective (8) de ladite tige de guidage (4) et un épaule (20) dudit piston de frein respectif (2).

7. Frein à disque à double piston (31) selon la revendication 2, **caractérisé en ce que** ladite deuxième partie de transmission d'effort (26) dudit pont (10) se trouve en prise dans une partie de pression (22) de ladite broche de compression de rattrapage (3) pour l'interaction, à ladite partie de pression (22) de ladite broche de compression de rattrapage (3) étant rotative relativement à ladite deuxième partie de transmission d'effort (26) dudit pont (10).

8. Frein à disque à double piston (31) selon la revendication 7, **caractérisé en ce que** ladite broche de compression de rattrapage (3) comprend une partie de liaison (21) pour l'accouplement à ladite traverse (1), à ladite partie de liaison (22) étant configurée sous forme d'un filet de vis extérieur à permettre une transmission des effort et d'une fonction de rattrapage, pendant que le filet de vis extérieur se trouve en prise dans un filet de vis intérieur correspondant de ladite traverse (1).

9. Frein à disque à double piston (31) selon la revendication 8, **caractérisé en ce que** ladite broche de compression de rattrapage (3) est fixée via un système de guidage axial (29) audit étrier de frein (7) et/ou d'une partie reliée audit étrier de frein (7), audit système de guidage axial (29) permettant un mouvement rotatif et un mouvement linéaire axial de ladite broche de compression de rattrapage (3).

10. Frein à disque à double piston (31) selon une quelconque des revendications 7 à 9, **caractérisé en ce qu'**au moins un ressort de retour (5) est disposé autour de chaque piston de frein (2) entre ladite traverse (1) et ledit étrier de frein (7) et/ou une partie reliée audit étrier de frein (7).

11. Frein à disque à double piston (31) selon une quelconque des revendications 7 à 9, **caractérisé en ce que** chaque piston de frein (2) st relié à un soufflet (13) dans une zone de sa partie de garniture (18) respective en coopération avec ladite garniture de frein (14), lequel soufflet est monté audit étrier de frein (7) et/ou une partie reliée audit étrier de frein (7).

12. Frein à disque à double piston (31) selon une quelconque des revendications précédentes, **caractérisé en ce que** ladite broche de compression de rattrapage (3) est disposée de façon, que son axe longitudinale s'étende en parallèle aux axes longitudinaux desdits pistons de frein (2).

13. Frein à disque à double piston (31) selon une quelconque des revendications précédentes, **caractérisé en ce que** ledit levier de frein (9) comprend des billes (33) pour le support audit étrier de frein (7) et pour l'interaction avec ledit pont (10).

14. Frein à disque à double piston (31) selon la revendication 13, **caractérisé en ce que** lesdites billes (33) sont reçues dans des paliers à glissement (34).

15. Frein à disque à double piston (31) selon une quelconque des revendications précédentes, **caractérisé en ce que** ledit levier de frein (9) est configuré sous forme d'une pièce en acier forgé usinée ou d'une pièce en fonte.

16. Frein à disque à double piston (31) selon une quelconque des revendications précédentes, **caractérisé en ce que** ledit dispositif de rattrapage (11) set disposé dans ledit étrier de frein (7) de façon à être accessible ou remplaçable de l'extérieur.
